# EUROPÄISCHE PATENTSCHRIFT

(11) **EP 0 961 760 B1**
(45) Veröffentlichungstag und Bekanntmachung des Hinweises auf die Patenterteilung: **24.10.2001**
(21) Anmeldenummer: 98902745.3
(22) Anmeldetag: 11.02.1998
(51) Int. Cl.: C02F 3/12, C02F 3/00

(54) **EINRICHTUNG ZUR DURCHFÜHRUNG EINES VERFAHRENS ZUR REINIGUNG VON ABWASSER**
DEVICE FOR CARRYING OUT A METHOD FOR CLEANING WASTE-WATER
DISPOSITIF PERMETTANT DE METTRE EN OEUVRE UN PROCEDE D'EPURATION D'EAUX USEES

(30) Priorität: 18.02.1997 AT 26297; 03.06.1997 AT 94197; 10.10.1997 AT 171497
(43) Veröffentlichungstag der Anmeldung: 08.12.1999
(73) Patentinhaber: INGERLE, Kurt, A-6020 Innsbruck (AT)
(72) Erfinder: INGERLE, Kurt, A-6020 Innsbruck (AT)
(74) Vertreter: Torggler, Paul Norbert, Dr.
(86) Internationale Anmeldenummer: AT9800028
(87) Internationale Veröffentlichungsnummer: WO9837026

(56) Entgegenhaltungen:
- EP-A- 0 338 182
- EP-A- 0 339 013
- WO-A-97/08104
- GB-A- 1 549 400

## Beschreibung

Der Erfindung liegt die Überlegung zugrunde, daß das beim Belebungsverfahren lediglich zur Trennung von Schlamm und Klarwasser dienende Nachklärbecken mit der dazugehörigen Rücklaufschlammführung durch eine Einbeckentechnologie ersetzt werden kann, die neben dem Klarwasserabzug und der Rücklaufschlammführung auch biochemische Prozesse zuläßt. Ein intermittierend mit Rücklaufschlamm beschicktes Belebungsbecken des Belebungsverfahrens wird mit einem nach der Einbeckentechnologie arbeitenden Sedimentationsbecken vereint. Das Sedimentationsbecken ersetzt somit das bei herkömmlichen Belebungsverfahren erforderliche Nachklärbecken einschließlich des Rückschlammpumpwerkes. Diese Kombination des Belebungsverfahrens und der Einbeckentechnologie ist in der am 6.3.1997 veröffentlichten WO 97/08104 des Anmelders beschrieben.

Typisch für dieses Verfahren ist, daß einem belüftbaren Belebungsbecken (B-Becken) ein Sedimentationsbecken (S-Becken) nachgeschaltet wird, in dem mehrmals am Tag ein Betriebszyklus abläuft, bei dem der Schlamm wieder mit Wasser vermischt wird (Rührphase R), anschließend setzt sich der Schlamm ab (Vorabsetzphase V) und abschließend wird Klarwasser abgezogen (Abzugsphase A).

Eine besonders einfache Einrichtung zur Durchführung des Verfahrens ergibt sich, wenn das Belebungsbecken und das Sedimentationsbecken durch im Bodenbereich des Sedimentationsbeckens und im Wasserspiegelbereich vorgesehene Öffnungen zu kommunizierenden Gefäßen verbunden sind, und wenn Einrichtungen zum gleichzeitigen Transport von Beckeninhalt aus dem Belebungsbecken durch die Öffnung(en) im Bodenbereich und aus dem Sedimentationsbecken durch die Öffnung(en) im Wasserspiegelbereich vorgesehen sind.

Wird während der Rührphase R der Inhalt des S-Beckens belüftet, so unterstützt die im S-Becken ablaufende Einbeckentechnologie die Hauptfunktionen des B-Beckens, nämlich den Abbau organischer Kohlenstoffverbindungen und die Nitrifikation. Die zur Eintragung des Sauerstoffs dienenden Einrichtungen bewirken dabei zweckmäßigerweise gleichzeitig das Aufrühren des Schlammes im S-Becken sowie das Rückführen des während eines Zyklus (Z = R + V + A) vom B-Becken ins S-Becken verlagerten Schlammes ins B-Becken.

Die in der R-Phase stattfindende Aufwirbelung des Schlammes und die Schlammrückführung ins B-Becken kann aber auch ohne Sauerstoffeintrag ins S-Becken mit einer Pumpe erfolgen, die eine hohe hydraulische Kapazität bei geringer Förderhöhe aufweist.

Weitere Einzelheiten der Erfindung werden anschließend anhand der Zeichnung erläutert. In dieser ist

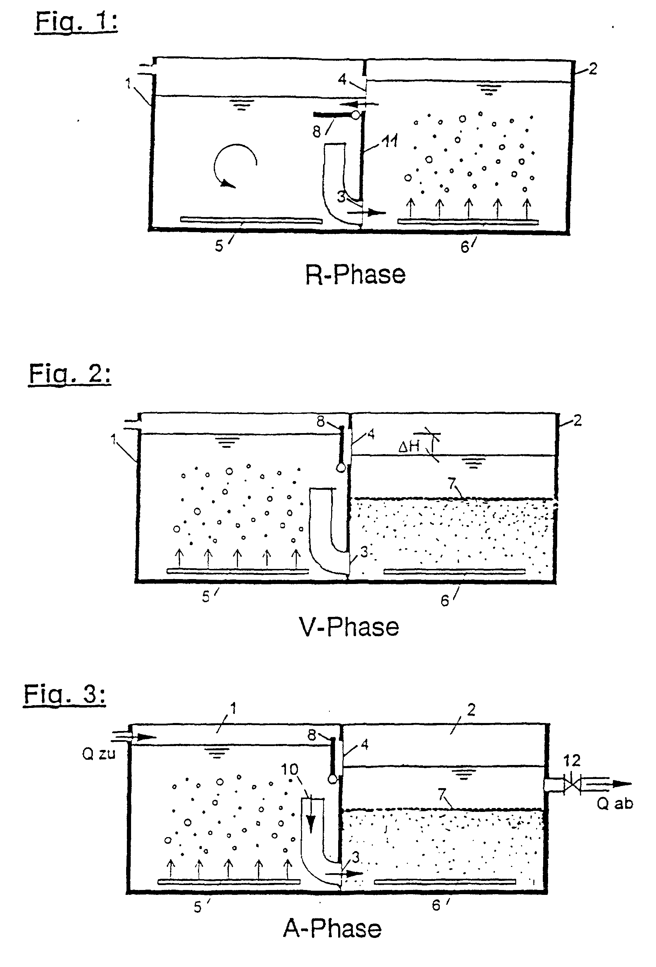

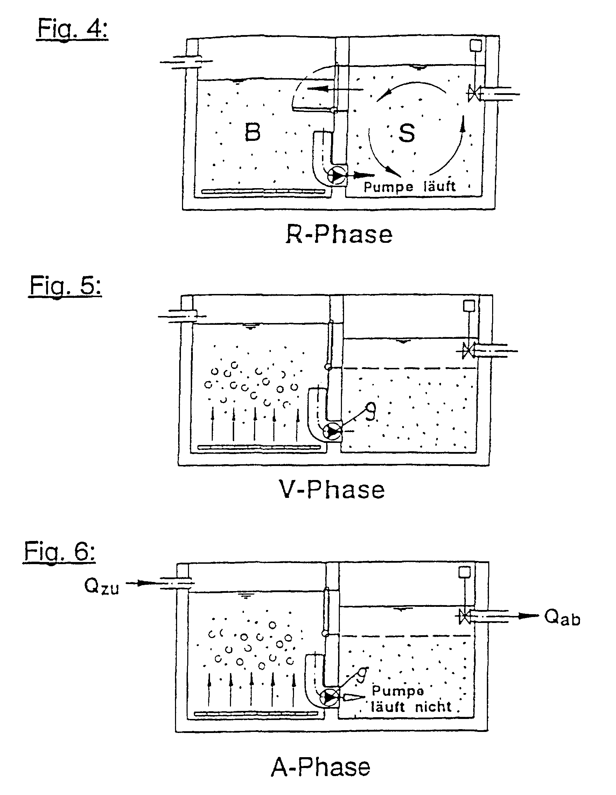

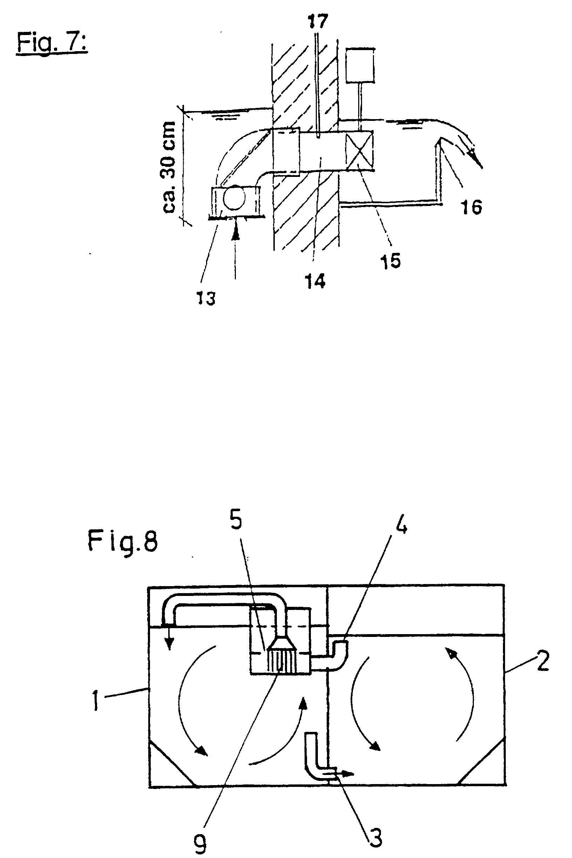

Fig. 1 ein schematischer Schnitt einer erfindungsgemäßen Einrichtung im Zustand der R-Phase, Fig. 2 stellt die V-Phase und Fig. 3 die A-Phase dar. In Fig. 1 bis 3 wird im S-Becken eine Belüftungseinrichtung 6 (z.B. eine feinblasige Druckbelüftung) eingesetzt, Fig. 4 bis 6 und 8 zeigt zum Betreiben der R-Phase den Einsatz einer Pumpe anstatt einer Belüftungseinrichtung, Fig. 7 eine Einrichtung zum Klarwasserabzug.

Allen dargestellten Ausführungsbeispielen gemeinsam ist die räumlich benachbarte Anordnung von B-Becken 1 und S-Becken 2. Die Trennwand 11 zwischen diesen beiden Becken weist Öffnungen - eine in beiden Richtungen durchströmbare Öffnung im Bodenbereich 3 und eine nur vom S-Becken 2 ins B-Becken 1 durchströmbare Öffnung im Wasserspiegelbereich 4 - auf, sodaß sich die Becken 1 und 2 als kommunizierende Gefäße verhalten.

Im B-Becken und S-Becken sind am Beckenboden Belüftungseinrichtungen 5 und 6 vorgesehen, die intermittierend betrieben werden (Fig. 1 bis 3). Wird z.B. keine Belüftungseinrichtung betrieben, liegt der Wasserspiegel in beiden Becken gleich hoch. Wird jetzt nur die Belüftung 6 im S-Becken 2 eingeschaltet, so steigt der Wasserspiegel in diesem Becken durch die dann in der Flüssigkeit vorhandenen Luftbläschen über den des B-Beckens 1 an und es entsteht dadurch eine beide Becken umfassende Umwälzströmung (R-Phase). Die Öffnung in Wasserspiegelhöhe wird dann vom Becken 2 (Fig. 1) nach Becken 1 und die Öffnung am Beckenboden umgekehrt durchströmt.

Wird die Belüftungseinrichtung 5 im B-Becken ein- und die im S-Becken ausgeschaltet, so kommt es zu keiner Umwälzströmung, da ein Abfließen der Flüssigkeit vom Becken 1 ins Becken 2 durch die wasserspiegelnahe Öffnung 4 nicht möglich ist.

Die Öffnung in Wasserspiegelhöhe 4 ist z.B. mit einer Klappe 8 versehen, die nur eine Strömung von Becken 2 in das Becken 1 zuläßt. Die bodennahe Öffnung 3 ist so gestaltet, daß - abgesehen von der R-Phase - nur luftblasenfreier Schlamm in den Bodenbereich des S-Beckens gelangt, Der Inhalt des S-Beckens 2 bleibt in Ruhe und der Schlamm kann sich absetzen (V-Phase, Fig. 2). Hat sich genug Klarwasser gebildet, kann dann Klarwasser abgezogen werden (A-Phase, Fig. 3).

In Fig. 4 bis 6 sind die drei Phasen einer Anlage mit Pumpumwälzung dargestellt. Die Aufwirbelung des Schlammes und die Umwälzung in der R-Phase erfolgt nicht mit einer Belüftungseinrichtung wie in Fig. 1, sondern mit einer Pumpe 9, die zweckmäßigerweise in der bodennahen Öffnung 3 situiert ist. Anstatt einer Pumpe kann auch ein Rührwerk oder eine ähnliche Einrichtung, die eine starke Strömung erzeugt, eingesetzt werden.

In der Rührphase R wird der Schlamm im S-Becken wieder aufgewirbelt und im Kreislauf über das B-Becken geführt. Vom B-Becken ins S-Becken verlagerter Schlamm sowie sich im S-Becken bildender Schwimmschlamm wird ins B-Becken geleitet. Je nach Sauerstoffeintrag herrscht in dieser Phase ein aerobes oder anoxes Milieu vor.

In der Vorabsetzphase V läuft ein Doppelprozeß ab: einerseits setzt sich der Schlamm ab und andererseits wird denitrifiziert. Der sich absetzende Schlamm bildet einen Flockenfilter, der auch kleine Belebtschlammflocken aus dem Klarwasser herausfiltert und somit einen guten Kläranlagenablauf garantiert. Die Dauer dieser Phase liegt bei ca. 40 Minuten.

Schließlich dient die Abzugsphase A dem Abzug von Klarwasser aus dem S-Becken. Auch während dieser Phase sinkt der Schlamm weiter zu Boden und ist in der Lage zu denitrifizieren. Prinzipiell kann bei völligem Fehlen von Sauerstoff (anaerobes Milieu) auch biologisch Phosphor eliminiert werden.

Fig. 7 zeigt einen möglichen Klarwasserabzug. In der Abzugsphase A, wenn der Schlammspiegel 7 schon mehr als 50 cm unter dem Wasserspiegel liegt, wird über im Abstand von ca. 1,0 m angeordnete, ca. 20 bis 30 cm tief liegende Abflußeinrichtungen Klarwasser abgezogen. Das Klarwasser gelangt anschließend in einen mit einem elektrischen oder pneumatischen Schieber abschließbaren Druckkanal, dem ein fester Überfall zur Haltung eines gewünschten Wasserspiegels in den Becken nachgeschaltet ist. Durch Einbringen einer kleinen Klarwassermenge 15 in den Druckkanal kann man ein Eindringen von Schlamm in das Abzugssystem bei geschlossenem Schieber mit Sicherheit verhindern.

Der Überschußschlammabzug (ÜS-Abzug) kann bei diesem Verfahren automatisiert werden. Bei kleinen Anlagen wird am Ende der V-Phase in einer Tiefe von 50 bis 100 cm kurzzeitig (ca. 1 bis 2 Minuten) vorzugsweise mit einer Pumpe Inhalt des S-Beckens abgezogen. Ist der Schlammspiegel noch zu hoch, wird konzentriert Überschußschlamm abgezogen, ist er schon zu tief, überwiegt der Abzug von Klarwasser. Das abgezogene Schlamm-Klarwassergemisch gelangt in einen Schlammspeicher, wo sich der Schlamm absetzt. Das feststofffreie Trübwasser wird über einen Rücklauf wieder in das B-Becken geleitet. Der Schlammspeicher ist von Zeit zu Zeit zu entleeren.

Eine andere Möglichkeit, Überschußschlamm abzuziehen, besteht darin, den Schlammspiegel am Ende der V-Phase mit einem Schlammspiegelmeßgerät zu messen und den ÜS-Abzug in Abhängigkeit der Lage des Schlammspiegels vorzunehmen. Liegt der Schlammspiegel z.B. am Ende der V-Phase unter 75 cm unter dem Wasserspiegel, so wird kein Schlamm abgezogen, liegt er darüber, kommt es zu einem Schlammabzug am Boden des S-Beckens. Diese Methode - hauptsächlich für größere Kläranlagen geeignet - hat den Vorteil, daß nur schon eingedickter Schlamm erfaßt wird.

Bei größeren Kläranlagen wird man einem B-Becken zwei S-Becken zuordnen und die beiden S-Becken phasenverschoben so betreiben, daß immer eine A-Phase zur Verfügung steht. Man erhält dann einen Durchlaufbetrieb (Kläranlagenzulauf = Kläranlagenablauf). Beispielsweise kann dann mit folgenden Phasen gearbeitet werden: R = 10'; V = 40'; A = R + V = 50'; Z = R + V + A = 100'. Die V-Phase dient der Bildung des benötigten Klarwasserkörpers von mindestens 50 cm Stärke. Das in der A-Phase in einem S-Becken gebildete Klarwasser ist dann als maximale Abzugsmenge anzusehen. Mit der Sinkgeschwindigkeit des Schlammspiegels vₛ und der Fläche eines S-Beckens F ergibt sich Q_{ab} = F x vs, wobei weiter vₛ x ISV x TS = 725 angenommen werden kann (siehe auch Kayser, gwf, Nr. 12, 1995).

Bei kleinen Kläranlagen wird dem B-Becken nur ein S-Becken zugeordnet. Die Kläranlage wird dann im Aufstaubetrieb gefahren. In der R- und V-Phase hebt das zufließende Abwasser den Wasserspiegel in beiden Becken an, in der A-Phase muß dann die in einem Zyklus zugeflossene Flüssigkeit abgelassen werden. In solchen Anlagen wird man die geruchsbelastete Abluft eines Vorklär- und Schlammspeicherbeckens absaugen und für die Belüftung des B-Beckens verwenden. Man kann dadurch Geruchsbelästigungen vermeiden.

Fig. 8 zeigt die R-Phase bei Einsatz einer Pumpe in der wasserspiegelnahen und nicht in der bodennahen Öffnung. Die wasserspiegelnahe Öffnung wird beispielsweise so ausgebildet, daß Schwimmschlamm vom S-Becken ins B-Becken geleitet wird, Zusätzlich kann von der Pumpe auch Luft ins B-Becken eingetragen und somit ein Belüftungseffekt erzielt werden.

Der Vorteil des beschriebenen Verfahrens liegt in der hohen Reinigungsleistung, dem sehr geringen Volumenbedarf für Becken und der auf ein Minimum reduzierten maschinellen Einrichtung, was eine hohe Wirtschaftlichkeit bewirkt. Die Belüftungseinrichtungen im Belebungsbecken stehen sauerstoffgesteuert praktisch immer in Betrieb. Die Aufwirbelung des sedimentierten und die Kreislaufführung des ins Sedimentationsbecken verlagerten Schlammes wird durch einfache Belüftungseinrichtungen oder Rührwerke bewirkt. Weiters kann mit sehr hoher Trockensubstanz (5,0 bis 8,9 g/l) im System gearbeitet werden. Schließlich wird das Sedimentationsbecken optimal genutzt, da bei kleiner hydraulischer Belastung (Trockenwetter TW) die biochemischen Prozesse und bei hoher (Regenwetter RW) die hydraulischen bevorzugt werden können.

## Patentansprüche

1. Einrichtung zur Durchführung eines Verfahrens zur Reinigung von Abwasser mittels Belebtschlamm, in dem das zu reinigende Abwasser zunächst in ein belüftbares Belebungsbecken und anschließend in ein Sedimentationsbecken eingeleitet wird, in welchem eine Trennung von Schlamm und Klarwasser erfolgt, woraufhin Schlamm in das Belebungsbecken rückgeführt und Klarwasser abgezogen wird, wobei im Sedimentationsbecken mehrmals am Tag ein Betriebszyklus abläuft, bei dem der Schlamm wieder mit dem Klarwasser vermischt wird (Rührphase R), **dadurch gekennzeichnet, daß** das Belebungsbecken (1) und das Sedimentationsbecken (2) durch im Bodenbereich des Sedimentationsbeckens (2) und im Wasserspiegelbereich vorgesehene Öffnungen (3,4) zu kommunizierenden Gefäßen verbunden sind, und daß Einrichtungen zum gleichzeitigen Transport von Beckeninhalt aus dem Belebungsbecken (1) durch die Öffnung(en) (3) im Bodenbereich und aus dem Sedimentationsbecken (2) durch die Öffnung(en) (4) im Wasserspiegelbereich vorgesehen sind.

2. Einrichtung nach Anspruch 1, **dadurch gekennzeichnet. daß** die Öffnung (4) im Wasserspiegelbereich nur in Richtung vom Sedimentationsbecken (2) zum Belebungsbecken (1) durchströmbar ist.

3. Einrichtung nach Anspruch 1 oder 2, **dadurch gekennzeichnet, daß** der Öffnung (3) im Bodenbereich des Sedimentationsbeckens (2) im Belebungsbecken (1) eine erhöhte Zulauföffnung (10) zugeordnet ist.

4. Einrichtung nach einem der Ansprüche 1 bis 3, **dadurch gekennzeichnet, daß** in beiden Becken am Beckenboden Belüftungseinrichtungen (5, 6) - vorzugsweise feinblasige Druckbelüftungen - vorgesehen werden, daß diese Belüftungseinrichtungen intermittierend betrieben werden, daß bei Belüftung des Belebungsbeckens der Inhalt dieses Beckens belüftet und in Turbulenz versetzt wird und gleichzeitig der Inhalt des Sedimentationsbeckens in Ruhe bleibt bzw. Klarwasser abgezogen wird, und daß bei Belüftung des Sedimentationsbeckens der Inhalt dieses Beckens belüftet und in Turbulenz versetzt wird und darüberhinaus eine Umwälzströmung über das Belebungsbecken entsteht, wobei durch die oberflächennahe Öffnung bzw. Öffnungen Flüssigkeit vom Sedimentationsbecken in das Belebungsbecken und durch die bodennahe Öffnung bzw, Öffnungen Flüssigkeit in umgekehrter Richtung strömt.

5. Einrichtung nach einem der Ansprüche 1 bis 3, **dadurch gekennzeichnet, daß** zum Rühren und Umwälzen (Rührphase R) eine oder mehrere Pumpen bzw. Rührwerke (9) mit hoher hydraulischer Leistung bei geringer Förderhöhe vorzugsweise in der bodennahen Öffnung (3) bzw. den bodennahen Öffnungen (3) eingesetzt werden.

6. Einrichtung nach einem der Ansprüche 1 bis 3, **dadurch gekennzeichnet, daß** zum Rühren und Umwälzen (Rührphase R) eine oder mehrere Pumpen bzw. Rührwerke (9) mit hoher hydraulischer Leistung bei geringer Förderhöhe in der Öffnung (4) im Wasserspiegelbereich bzw. den Öffnungen im Wasserspiegelbereich eingesetzt werden.

## Claims

1. Apparatus for carrying out a method of purifying sewage by means of activated sludge in which the sewage to be purified is firstly introduced into a aeratable activation tank and then into a sedimentation tank in which separation of sludge and clean water takes place, whereupon sludge is recycled to the activation tank and clean water is drawn off, wherein an operating cycle in which the sludge is mixed with the clean water again (stirring phase R) takes place in the sedimentation tank several times a day, **characterised in that** the activation tank (1) and the sedimentation tank (2) are connected to form communicating vessels by openings (3, 4) provided in the bottom region of the sedimentation tank (2) and in the region of the water level, and that there are provided devices for the simultaneous transport of tank content from the activation tank (1) through the opening or openings (3) in the bottom region and from the sedimentation tank (2) through the opening or openings (4) in the region of the water level.

2. Apparatus according to claim 1 **characterised in that** the opening (4) in the region of the water level can have a flow therethrough only in the direction from the sedimentation tank (2) to the activation tank (1).

3. Apparatus according to claim 1 or claim 2 **characterised in that** an elevated feed opening (10) is associated in the activation tank (1) with the opening (3) in the bottom region of the sedimentation tank (2).

4. Apparatus according to one of claims 1 to 3 **characterised in that** provided in both tanks at the tank bottom are aeration devices (5, 6) - preferably fine-bubble pressure aeration means -, that said aeration devices are operated intermittently, that upon aeration of the activation tank the content of said tank is aerated and put into a turbulent condition and at the same time the content of the sedimentation tank remains at rest or clean water is drawn off, and that upon aeration of the sedimentation tank the content of said tank is aerated and put into a turbulent condition and in addition a circulatory flow occurs by way of the activation tank, wherein liquid flows from the sedimentation tank into the activation tank through the opening or openings near the surface and liquid flows in the opposite direction through the opening or openings near the bottom.

5. Apparatus according to one of claims 1 to 3 **characterised in that** one or more pumps or stirring mechanisms (9) with a high hydraulic output at a low delivery head are used preferably in the opening (3) near the bottom or the openings (3) near the bottom, for the stirring and circulating procedure (stirring phase R).

6. Apparatus according to one of claims 1 to 3 **characterised in that** one or more pumps or stirring mechanisms (9) with a high hydraulic output at a low delivery head are used in the opening (4) in the region of the water level or the openings in the region of the water level, for the stirring and circulating procedure (stirring phase R).

## Revendications

1. Dispositif pour la mise en oeuvre d'un procédé pour nettoyer des eaux usées au moyen de boue activée, dans lequel les eaux usées à nettoyer sont introduites d'abord dans un bassin d'épuration activée pouvant être aéré et ensuite dans un bassin de sédimentation, dans lequel intervient une séparation de la boue et de l'eau claire, après quoi de la boue est retournée dans le bassin d'épuration activée et de l'eau claire est soustraite, un cycle d'exploitation se déroulant plusieurs fois par jour dans le bassin de sédimentation, lors duquel la boue est mélangée à nouveau avec l'eau claire (phase d'agitation R), **caractérisé en ce que** le bassin d'épuration activée (1) et le bassin de sédimentation (2) sont reliés par des ouvertures (3, 4) prévues dans la zone du fond du bassin de sédimentation (2) et dans la zone du niveau d'eau pour former des vases communicants, et **en ce que** des dispositifs sont prévus pour le transport simultané du contenu du bassin provenant du bassin d'épuration (1) par l'ouverture (les ouvertures) (3) dans la zone du fond et provenant du bassin de sédimentation (2) par l'ouverture (les ouvertures) (4) dans la zone du niveau d'eau.

2. Dispositif selon la revendication 1, **caractérisé en ce que** l'ouverture (4) dans la zone du niveau d'eau ne peut être traversée qu'en direction du bassin de sédimentation (2) vers le bassin d'épuration activée (1).

3. Dispositif selon la revendication 1 ou 2, **caractérisé en ce qu'**une ouverture d'arrivée (10) élevée dans le bassin d'épuration (1) est associée à l'ouverture (3) dans la zone du fond du bassin de sédimentation (2).

4. Dispositif selon l'une quelconque des revendications 1 à 3, **caractérisé en ce que** des systèmes d'aération (5, 6), de préférence des aérations sous pression à bulles fines, sont prévus dans les deux bassins au fond du bassin, **en ce que** ces systèmes d'aération sont exploités de façon intermittente, **en ce que**, en cas d'aération du bassin d'épuration activée, le contenu de ce bassin est aéré et est mis en turbulence et dans le même temps le contenu du bassin de sédimentation reste au repos et de l'eau claire est soustraite, et **en ce que**, en cas d'aération du bassin de sédimentation, le contenu de ce bassin est aéré et mis en turbulence et il se forme de plus un courant de circulation au-dessus du bassin d'épuration activée, ce qui fait que du liquide s'écoule du bassin de sédimentation dans le bassin d'épuration activée par l'ouverture ou les ouvertures proche(s) de la surface et du liquide s'écoule en sens inverse par l'ouverture ou les ouvertures proche(s) du fond.

5. Dispositif selon l'une quelconque des revendications 1 à 3, **caractérisé en ce que**, pour l'agitation et la circulation (phase d'agitation R), on utilise une ou plusieurs pompes ou agitateurs (9) avec une puissance hydraulique élevée pour une faible hauteur de refoulement de préférence dans l'ouverture (3) proche du fond ou les ouvertures proches (3) proches du fond.

6. Dispositif selon l'une quelconque des revendications 1 à 3, **caractérisé en ce que**, que, pour l'agitation et la circulation (phase d'agitation R), on utilise une ou plusieurs pompes ou agitateurs (9) avec une puissance hydraulique élevée pour une faible hauteur de refoulement dans l'ouverture (4) dans la zone du niveau de l'eau ou les ouvertures dans la zone du niveau de l'eau.
